# EUROPÄISCHE PATENTSCHRIFT

(11) **EP 2 465 956 B1**
(45) Veröffentlichungstag und Bekanntmachung des Hinweises auf die Patenterteilung: **03.07.2013**
(21) Anmeldenummer: 11009890.2
(22) Anmeldetag: 15.12.2011
(51) Int. Cl.: C22C 9/02, C22C 1/02, C22F 1/08

(54) **Hartphasenhaltige Kupfer-Zinn-Mehrstoffbronze, Herstellungsverfahren und Verwendung**
Copper-tin multi-alloy bronze containing hard phases, method for producing same and use of same
Bronze multi-matériaux-cuivre-zinc contenant une phase dure, procédé de fabrication et utilisation

(30) Priorität: 17.12.2010 DE 102010055055
(43) Veröffentlichungstag der Anmeldung: 20.06.2012
(73) Patentinhaber: Wieland-Werke AG, 89079 Ulm (DE)
(72) Erfinder: Weber, Kai, Dr., 89287 Bellenberg (DE)

(56) Entgegenhaltungen:
- EP-A1- 1 652 946
- DE-A1-102005 059 391

## Beschreibung

Die Erfindung betrifft eine Kupferlegierung auf der Basis einer Kupfer-Zinn-Mehrstoffbronze, ein Herstellungsverfahren und die Verwendung.

Infolge der stark zunehmenden mechanischen, thermischen und korrosiven Beanspruchung der verschleißbeanspruchten Bauteile in modernen Konstruktionen, Maschinen, Motoren und Aggregaten steigen die Anforderungen an die Eigenschaften der für den Einsatz geeigneten Legierungen.

Aus diesem Grund besteht das Ziel, die Betriebseigenschaften der verschleißbeständigen Werkstoffe weiterzuentwickeln. Dazu gehört einerseits die Erhöhung der Härte, der Festigkeitseigenschaften, der Temperaturbeständigkeit des Gefüges und der komplexen Verschleißbeständigkeit bei gleichzeitig ausreichenden Zähigkeitseigenschaften. Andererseits stellt sich die Notwendigkeit einer hohen Beständigkeit der Legierung gegenüber korrosiv wirkenden Medien. Weiterhin muss der verschleißbeständige Werkstoff hinreichend gute Notlaufeigenschaften besitzen, die dem Verschweißen der Beanspruchungspartner entgegenwirken. Bisher werden für diesen Zweck besonders bleihaltige Kupferlegierungen eingesetzt.

Vorbekannt sind Mehrstoffbronzen auf der Basis von Kupfer und Zinn mit weiteren, die Eigenschaften bestimmenden Bestandteilen. Aus der Druckschrift US 6,699,337 B2 sind Kupferlegierungen bekannt, die außer Kupfer als weitere Elemente Sn, Ni, P, Zn, Si, Fe, Co, Mg, Ti, Cr, Zr und Al enthalten können. Die Summe aller Elemente soll maximal 30 Gew.-% nicht übersteigen. Die weiteren Legierungsbestandteile sind in allgemeiner Form angeführt, ohne den jeweiligen Einfluss dieser Legierungsbestandteile näher zu erläutern. Der mögliche Abwalzgrad für eine Kaltumformung ist aus dem jeweiligen Elementanteil abzuleiten, indem der Zinngehalt und der Anteil der übrigen Elemente über einen mathematischen Zusammenhang miteinander in Beziehung gesetzt werden.

Weitere Kupfer-Zinn-Legierungen sind aus DE 10 2006 027 844 A1 der Anmelderin mit Zinngehalten über 9 Gew.-% bekannt, bei denen Chrom- bzw. Nickelsilizide eine bessere Beständigkeit gegen adhäsiven Verschleiß bewirken. Insbesondere ist die Legierung für eine Verwendung für Gleitlagerelemente oder für Gleitlagerflächen in Verbundkomponenten vorgesehen.

Auch ist aus der Offenlegungsschrift DE 41 26 079 A1 ein Gießverfahren bekannt, mit dem sich ein breites Spektrum von Kupferlegierungen herstellen lässt. Unter anderem lassen sich mit diesem Verfahren auch Kupfer-Zinn-Legierungen mit 1 bis 11 % Zinn, bis zu 6 % Zink und den weiteren Elementen Eisen, Mangan, Nickel, Chrom, Titan, Magnesium und Zirkon in geringeren Anteilen gießen. Im Herstellungsverfahren wird ein gezielter Gefügezustand in situ eingestellt, welcher die unmittelbare Weiterverarbeitung durch Kaltwalzen ermöglicht.

Zudem sind Kupfer-Zinn-Legierungen aus den Druckschriften US 2,128,955 und US 2,128,954 im Zusammenhang mit den weiteren Elementen Fe, P bzw. Fe, Mn, P bekannt. Es handelt sich dabei um Legierungen, die sich für eine Warmumformung eignen.

In den genannten Druckschriften wird meist auch ein gewisser Phosphorgehalt zur Verbesserung der Gießbarkeit hinzugefügt. Auch ein gewisser Pb-Gehalt kann zur Verbesserung der Notlaufeigenschaften sowie zur besseren spanenden Bearbeitbarkeit vorgesehen sein.

Wie der Stand der Technik aufzeigt, ergeben sich aufgrund der bereits bei der binären Legierung vorhandenen breiten Erstarrungsintervalle von Kupfer-Zinn-Legierungen durch Hinzufügen weiterer Elemente vielversprechende Eigenschaftskombinationen für unterschiedliche Einsatzgebiete der Technik.

Der Erfindung liegt die Aufgabe zugrunde, eine Kupfer-Zinn-Mehrstoffbronze mit verbesserter Kaltumformbarkeit, hoher Festigkeit, Härte, Duktilität, Temperatur- und Korrosionsbeständigkeit sowie mit einem verbesserten Widerstand gegen die Verschleißmechanismen Abrasion, Adhäsion, tribochemische Reaktion und Oberflächenzerrüttung bereitzustellen.

Die Erfindung wird bezüglich einer Kupfer-Zinn-Mehrstoffbronze durch die Merkmale des Anspruchs 1, bezüglich eines Herstellungsverfahrens durch die Merkmale des Anspruchs 9 und bezüglich einer Verwendung durch die Merkmale der Ansprüche 15 bis 17 wiedergegeben. Die weiteren rückbezogenen Ansprüche betreffen vorteilhafte Aus- und Weiterbildungen der Erfindung.

Die Erfindung schließt eine Kupfer-Zinn-Mehrstoffbronze ein, bestehend aus (in Gew.-%):
0,5 bis 14,0 % Sn,
0,01 bis 7,0 % Zn,
0,05 bis 2,0 % Al,
0,01 bis 2,0 % Si,
0,1 bis 2,0 % Fe,
wahlweise noch 0,2 bis 4,0 % Mn,
wahlweise noch bis maximal 0,08 % P und
wahlweise noch bis maximal 0,08 % S,
Rest Kupfer und unvermeidbaren Verunreinigungen, wobei in der
Legierung der Gehalt von Zinn größer ist als der von Zink.

Die Erfindung geht dabei von der Überlegung aus, eine Kupfer-Zinn-Mehrstoffbronze mit eingelagerten Fe-haltigen und Al-haltigen Mono- und Mischsiliziden, Fe-Partikeln sowie gegebenenfalls Phasen des Systems Fe-Al bereitzustellen, die mittels des Kokillengussverfahrens bzw. mit Hilfe des kontinuierlichen oder halbkontinuierlichen Stranggussverfahrens hergestellt werden kann. Durch die Ausscheidung von Mono- und Mischsiliziden, von Fe-Partikeln und gegebenenfalls von Phasen des Systems Fe/Al weist die Kupfer-Zinn-Mehrstoff-Bronze einen hohen Hartphasenanteil auf, der zu einer Verbesserung des Werkstoffwiderstandes gegen den abrasiven Verschleiß beiträgt. Außerdem bedingt der Anteil an Siliziden aufgrund einer niedrigen Verschweißneigung eine bessere Beständigkeit gegen den adhäsiven Verschleiß. Insbesondere ist festzuhalten, dass die Legierung, bis auf etwaige Verunreinigungen, keinen Nickel- und keinen Bleianteil aufweist.

Die unterschiedlichen Silizidarten besitzen in Abhängigkeit von ihrer Form und Größe schon während des Gießprozesses sowie bei der Weiterverarbeitung des sich einstellenden Gusszustandes eine wichtige Funktion zur Gefügeausbildung. Während zumindest einer späteren Glühung wird durch sie eine Rekristallisation des Gefüges erleichtert bzw. verstärkt bzw. beschleunigt. Damit kann mittels eines hinreichend feinkörnigen Gefüges die Kombination aus hoher Festigkeit/ Härte und guten Zähigkeitseigenschaften erreicht werden. Das Element Eisen bildet dabei die Keimstellen für die Silizide. Durch eine Hinzugabe des Elements Mangan wird die Silizidbildung weiter unterstützt, wobei dann größere Silizide ausgebildet werden, welche die Legierung hinsichtlich Härte und Verschleiß verbessern. Durch eine Manganzugabe werden Mehrstoffbronzen mit eingelagerten Fe-Al-Mn-haltigen Mischsiliziden gebildet.

Der Gehalt an Zinn sowie an weiteren Elementen mit einer hohen Affinität zum Sauerstoff stellt besondere Anforderungen an die praktische Durchführung des Gießens von Kupfer-Zinn-Legierungen. So ist in der Praxis zur Gewährleistung besonders eines kontinuierlichen Gießvorganges sowie für die Desoxidation der Schmelze der Zusatz eines größeren Gehaltes an Phosphor üblich und weit verbreitet. Das Legierungselement Phosphor vergrößert jedoch in der erfindungsgemäßen Legierung den dendritisch erstarrten Gefügeanteil, wodurch sich die Zähigkeitseigenschaften der Gussformate verschlechtern können. Phosphor wird der Legierung folglich nicht oder nur zu einem ganz geringen Anteil bis maximal 0.08 Gew.-% hinzugefügt.

Ein Grundgedanke der Erfindung besteht daher in der Einstellung eines ausgewogenen Verhältnisses von ausscheidungsbildenden und damit Sn-entmischungsfördernden Elementen, wie beispielsweise Mn, Fe, Al, Si, sowie Sn-entmischungshemmenden Elementen, wie beispielsweise Zn in einem Kupfer-Zinn-basierenden Werkstoff. Gleichzeitig sind besonders die Legierungselemente Al und Zn hilfreich für die Gewährleistung eines kontinuierlichen Gießprozesses. Zink übernimmt zusätzlich die zwingende Desoxidation der Schmelze, so dass der Gehalt an Phosphor zumindest abgesenkt werden bzw. sogar ganz wegfallen kann. Hierbei ist in der Legierung der Gehalt von Zinn größer als der von Zink. Das bevorzugte Verhältnis von Sn/Zn beträgt 1,2 bis 2,5. Auf diese Weise können Gussformate mit einem sehr gleichmäßigen, heterogenen und dendritenarmen oder sogar dendritenfreien Gefüge hergestellt werden.

Durch das ausgewogene Verhältnis der genannten ausscheidungsbildenden und damit Sn-entmischungsfördernden Elementen und Sn-entmischungshemmenden

Elementen in der erfindungsgemäßen Legierung wird deren Erstarrungsintervall zudem entscheidend verkleinert. Die hierdurch geringer ausgebildete Porosität trägt maßgeblich zur Erhöhung der Druckfestigkeit sowie zur Verbesserung der komplexen Verschleißbeständigkeit der Verschleißschutzschicht bei.

Mittels der erfindungsgemäßen Legierungszusammensetzung kann der Entstehungsursache einer sich negativ auswirkenden Porosität in der Legierung entgegengewirkt werden. Ohne diese Maßnahme müsste eine Absenkung des Sn-Gehaltes der Legierung erfolgen. Allerdings ist die Höhe des Sn-Gehaltes in dem Werkstoff der Verschleißschutzschicht aus mehreren Gründen bedeutsam:
- Zinn als Legierungselement in einer Kupferlegierung trägt maßgeblich zur Absenkung der Schmelztemperatur bei. Dies erleichtert beispielsweise das Aufschmelzen der Legierung auf einen Grundkörper aus Stahl für Gleitanwendungen.
- Neben der Senkung der Schmelztemperatur verursacht der Legierungsanteil des Elementes Zinn eine durch Mischkristallverfestigung hervorgerufene Festigkeits- und Härtesteigerung des Werkstoffes, die bei höheren Zinn-Gehalten infolge der Bildung der Sn-reichen δ-Phase noch intensiviert wird.
- Das Legierungselement Zinn bedingt eine abgesenkte Neigung der Kupferlegierung zur Gasaufnahme während des Gieß- bzw. Aufschmelzprozesses. Hierdurch wird besonders während des Aufschmelzens der Legierung auf einen Grundkörper aus Stahl die Ausbildung einer offenen Porosität in der Verschleißschutzschicht unterdrückt, wodurch die Druckfestigkeit des Bauteils erhöht wird.

Im Verlauf der adhäsiven Verschleißbeanspruchung des Bauteiles bzw. der Verschleißschutzschicht aus der erfindungsgemäßen Kupfer-Zinn-Mehrstoffbronze trägt das Legierungselement Zinn im besonderen Maße zur Ausbildung einer sogenannten Triboschicht zwischen den Gleitpartnern bei. Dieser Mechanismus ist besonders unter Mischreibungsbedingungen bedeutsam, wenn die Notlaufeigenschaften eines Werkstoffes in den Vordergrund rücken. Die Triboschicht führt zur Verkleinerung der rein metallischen Kontaktfläche zwischen den Gleitpartnern, wodurch ein Verschweißen oder Fressen der Systemelemente verhindert wird. Somit leistet das Legierungselement Zinn einen bedeutenden Beitrag zum Ersatz des sonst verwendeten Elementes Blei, welches zum Zweck des Umweltschutzes in zukünftigen Entwicklungen ersetzt werden sollte.

Bereits während des Gieß- bzw. Aufschmelzprozesses der erfindungsgemäßen Legierung kommt es in deren Gefüge zum Mechanismus der anteiligen Sn-Entmischung an den ausgeschiedenen Partikeln, Siliziden und weiteren intermetallischen Phasen. Dieser Sn-Film besonders auf den Mono- und Mischsiliziden, die ohnehin als Verschleißträger in der Legierung fungieren, bewirkt im verschleißbeanspruchten Einsatz mittels einer Triboschichtbildung eine zusätzliche Verbesserung der Gleiteigenschaften der Silizide und damit eine weitere Erhöhung der Beständigkeit des Werkstoffes gegenüber dem adhäsiven Verschleiß.

Dem Legierungselement Aluminium werden in der Kupfer-Zinn-Mehrstoffbronze folgende Einflüsse zugeschrieben:
- Aluminium kann für die Ausscheidung der unterschiedlichen Silizide in dem Werkstoff und damit für die Zunahme des Bauteilwiderstandes besonders gegenüber dem adhäsiven Verschleißmechanismus bedeutsam sein. Die Folge einer intensiveren Silizidausscheidung in der Kupfer-Zinn-Mehrstoffbronze ist eine Verarmung der Matrix an diversen Legierungselementen, wodurch die Zähigkeitseigenschaften des Werkstoffes verbessert werden.
- Infolge der hohen Affinität des Aluminiums zum Sauerstoff kann sich auf der Oberfläche der Bauteile aus der erfindungsgemäßen Al-haltigen Kupfer-Zinn-Mehrstoffbronze sehr schnell eine dichte Schicht aus Al-Oxiden bilden.

Zum einen übernehmen die Al-Oxide die Funktion einer Deckschicht, die das Bauteil vor verschiedenen korrosiven Medien schützt.

Zum anderen verstärken die Al-Oxide die sogenannte Triboschicht auf der verschleißbeanspruchten Bauteiloberfläche, die ohnehin durch die Sn- und Zn-Oxide gebildet wird. Somit tragen die Al-Oxide zusätzlich zur Erhöhung des Widerstandes der Legierung gegenüber dem adhäsiven Verschleiß bei.

Das Legierungselement Eisen kann in der Kupfer-Zinn-Mehrstoffbronze mehrere Funktionen übernehmen:
- Fe und/oder Fe-haltige Silizide tragen wesentlich zur heterogenen Gefügeausbildung in der erfindungsgemäßen Legierung bei.
- Eisen bildet mit Si sehr feine Fe-Silizide bzw. gegebenenfalls feine Al-haltige Fe-Silizide, die die ansonsten duktile Matrix der Kupfer-Zinn-Mehrstoffbronze hinsichtlich einer Erhöhung des Widerstandes gegenüber dem abrasiven Verschleiß verstärken. Des Weiteren bedingt der Gehalt an Fe-Siliziden und gegebenenfalls an Al-haltigen Fe-Siliziden eine Festigkeits- bzw. Härtesteigerung sowie eine höhere Temperaturbeständigkeit des Gefüges der Kupfer-Zinn-Mehrstoffbronze.
- Das gleichzeitige Zulegieren von Fe und Al führt zur Bildung von Phasen des Systems Fe-Al, die wesentlich zur Erhöhung von Festigkeit und Härte der Kupfer-Zinn-Mehrstoffbronze beitragen.
- Schließlich übernimmt das Legierungselement Eisen als metallische Ausscheidung im Gefüge der Kupfer-Zinn-Mehrstoffbronze die Rolle eines Kornfeiners. Damit unterstützt Fe die besonders für hohe dynamische Bauteilbeanspruchungen erforderliche Einstellung einer Kombination von hoher Festigkeit und hinreichender Zähigkeit.

Aufgrund der Ausscheidungs- und Entmischungsvorgänge während des Gieß- bzw. Aufschmelzprozesses der erfindungsgemäßen Legierung besitzt diese schon im Guss- bzw. aufgeschmolzenen Zustand ein hohes Maß an Duktilität, woraus eine gute Kaltumformbarkeit resultiert. Zusätzlich weist die Legierung aufgrund des Hartphasenanteils hohe Festigkeits- und Härtewerte sowie eine hohe Beständigkeit gegenüber dem abrasiven und adhäsiven Verschleiß auf. Mit dieser Eigenschaftskombination ist der Erfindungsgegenstand schon im Gusszustand besonders geeignet als Verschleißschutzschicht, die beispielsweise auf einen Grundkörper aus Stahl aufgeschmolzen wird. Weiterhin können Gleitlagerelemente für Motoren, Getriebe, Abgasnachbehandlungsanlagen, Hebel- und Gelenksysteme, hydraulische Aggregate oder für Maschinen und Anlagen des allgemeinen Maschinenbaus aus dem Guss der erfindungsgemäßen Legierung hergestellt werden.

Bei einer vorteilhaften Ausführungsform der Erfindung kann die Kupfer-Zinn-Mehrstoffbronze bestehen aus (in Gew.-%):
3,0 bis 8,0 % Sn,
1,5 bis 5,5 % Zn,
0,05 bis 1,2 % Al,
0,01 bis 1,2 % Si,
0,1 bis 2,0 % Fe,
wahlweise noch 0,2 bis 3,0 % Mn,
wahlweise noch bis maximal 0,08 % P und
wahlweise noch bis maximal 0,08 % S,
Rest Kupfer und unvermeidbaren Verunreinigungen.

Bei einer weiteren vorteilhaften Ausführungsform der Erfindung kann die Kupfer-Zinn-Mehrstoffbronze bestehen aus (in Gew.-%):
0,5 bis 14,0 % Sn,
0,01 bis 7,0 % Zn,
0,2 bis 4,0 % Mn,
0,1 bis 2,0 % Fe,
0,05 bis 2,0 % Al,
0,01 bis 2,0 % Si
wahlweise noch bis maximal 0,08 % P und
wahlweise noch bis maximal 0,08 % S,
Rest Kupfer und unvermeidbaren Verunreinigungen.

Bei einer weiteren besonders vorteilhaften Ausführungsform der Erfindung kann die Kupfer-Zinn-Mehrstoffbronze bestehen aus (in Gew.-%):
4,0 bis 5,0 % Sn,
2,0 bis 3,0 % Zn,
1,0 bis 2,5 % Mn,
0,3 bis 1,5 % Fe,
0,3 bis 1,2 % Al,
0,3 bis 1,0 % Si
wahlweise noch bis maximal 0,08 % P und
wahlweise noch bis maximal 0,08 % S,
Rest Kupfer und unvermeidbaren Verunreinigungen.

Die Matrix des gleichmäßigen Gefüges dieser Ausgestaltung besteht aus duktiler α -Phase und je nach Sn-Gehalt der Legierung aus Anteilen der δ-Phase. Die δ -Phase, die in Dendritenform vorliegen kann, führt durch ihre hohe Festigkeit und Härte zum hohen Widerstand der Legierung gegen den abrasiven Verschleiß. Außerdem vergrößert die δ-Phase aufgrund ihres hohen Sn-Gehaltes, woraus ihre Neigung zur Ausbildung einer Triboschicht resultiert, die Beständigkeit des Werkstoffes gegenüber dem adhäsiven Verschleiß. In der Matrix sind Mn-haltige bzw. Fe-haltige und Al-haltige Mono- und Mischsilizide, Fe-Partikel sowie gegebenenfalls Phasen des Systems Fe-Al eingelagert. Dieses heterogene Gefüge, bestehend aus duktiler Matrix mit Ausscheidungen großer Härte, verleiht dem Werkstoff eine herausragende Eigenschaftskombination.

In diesem Zusammenhang zu nennen sind: Hohe Festigkeits- und Härtewerte bei gleichzeitig sehr guter Zähigkeit, ausreichend gute Warm- und Kaltumformbarkeit, hohe Temperaturbeständigkeit des Gefüges, hohe Korrosionsbeständigkeit, großer Widerstand gegen die Verschleißmechanismen Abrasion, Adhäsion und Oberflächenzerrüttung.

In bevorzugter Ausgestaltung der Erfindung ist die Legierung bis auf etwaige unvermeidbare Verunreinigungen frei von Nickel und Blei.

Bei einer vorteilhaften Ausführungsform der Erfindung können in der Kupfer-Zinn-Mischkristall-Matrix Fe-Silizide, Al-haltige Fe-Silizide, intermetallische Phasen des Systems Fe-Al, Fe-Partikel sowie gegebenenfalls Mn-haltige Fe-Mischsilizide und Mn-Al-haltige Fe-Mischsilizide eingelagert sein.

Vorteilhafterweise kann die Matrix des Gefüges der Kupfer-Zinn-Mehrstoffbronze im Gusszustand mit steigendem Sn-Gehalt der Legierung, abhängig vom Gieß/Abkühlungsprozess, aus zunehmenden Anteilen an δ-Phase (Sn-reich) in sonst α -Phase (Sn-arm) der zinkhaltigen Cu-Sn-Mischkristallarten bestehen.

In bevorzugter Ausgestaltung der Erfindung kann bei der Kupfer-Zinn-Mehrstoffbronze nach einer Weiterverarbeitung, die zumindest eine Warmumformung oder zumindest eine Kaltumformung oder zumindest eine Warmumformung und eine Kaltumformung sowie wahlweise weitere Glühschritte beinhaltet, das Gefüge mit einem Gehalt der δ-Phase bis zu 60 Vol.-%, der Silizide, Fe-Al-Phasen und der Fe-Partikel bis zu 20 Vol.-% sowie ein Rest α-Phase vorliegen.

Wichtige Ausführungsbeispiele der Erfindung werden anhand einer Tab. 1 näher erläutert. Es wurden Gussbolzen bzw. -platten der erfindungsgemäßen Kupfer-Zinn-Mehrstoffbronze durch Kokillen- bzw. Strangguss hergestellt. Die chemische Zusammensetzung der Abgüsse geht aus Tab. 1 hervor.

**Tabelle 1: Chemische Zusammensetzung der Gussbolzen und -platten**

| **Nr.** | **Cu [%]** | **Sn [%]** | **Mn [%]** | **Fe [%]** | **Si [%]** | **Zn [%]** | **Al [%]** |
|---|---|---|---|---|---|---|---|
| **Leg.-Typ 1 (Kokillen guss)** | Rest | 4,40 | 1,13 | 0,81 | 0,65 | 2,27 | 0,74 |
| **Leg.-Typ 2 (Stranggus**s) | Rest | 4,53 | 1,36 | 1,00 | 0,58 | 2,45 | 0,74 |
| **Leg.-Typ 3 (Stranggus**s) | Rest | 4,19 | 2,25 | 0,89 | 0,66 | 2,50 | 0,81 |
| **Leg.-Typ 4 (Strangguss)** | **Rest** | **6,18** | **2,56** | **0,92** | **0,96** | **4,76** | **0,89** |
| **Leg.-Typ 5 (Kokillenguss)** | Rest | 11,06 | 2,13 | 1,37 | 0,69 | 4,89 | 0,85 |
| **Leg.-Typ 6 (Kokillenguss)** | Rest | 8,80 | 2,40 | 1,29 | 0,84 | 4,04 | 0,87 |
| **Leg.-Typ 7 (Kokillenguss)** | Rest | 6,48 | 2,83 | 1,47 | 1,01 | 4,70 | 0,78 |

**Tabelle 2: Auswahl von mechanischen Eigenschaften der Gussbolzen bzw. -platten der Leg.-Typen 2, 3 und 4**

| **Nr.** | **Rₘ [MPa]** | **Rₚ₀,₂ [MPa]** | **A5 [%]** | **E [GPa]** | **HB 1/10** | **HBW 1/30** |
|---|---|---|---|---|---|---|
| **Leg.-Typ 2 (Strangguss)** | 387 | 200 | 28 | 115 | 103 | 115 |
| **Leg.-Typ 3 (Strangguss)** | 395 | 200 | 30 | 107 | 110 | 123 |
| **Leg.-Typ 4 (Strangguss)** | **404** | **215** | **15** | **121** | **140** | **152** |

Nach dem Gießen befinden sich die mechanischen Eigenschaften der Bolzen bzw. Platten auf dem Niveau, das für die Leg.-Typen 2, 3 und 4 in Zahlenwerten aus Tab. 2 zu entnehmen ist. Besonders die Werkstoffkennwerte der Härte und der Bruchdehnung A5, welche ein Maß für die Duktilität der Legierung ist, können mittels einer Variierung der chemischen Zusammensetzung der erfindungsgemäßen Kupfer-Zinn-Mehrstoffbronze an die jeweiligen Bauteilanforderungen angepasst werden.

Die erfindungsgemäße Legierung kann in einer Ausführungsform einer Weiterverarbeitung unterzogen werden. Auf diese Weise wird der Forderung nach einer Verbesserung der komplexen Betriebseigenschaften der verschleißbeanspruchten Werkstoffe entsprochen, da es in modernen Maschinen, Motoren, Getrieben, Aggregaten, Konstruktionen und Anlagen zu einer stark zunehmenden Beanspruchung der Systemelemente kommt. Im Zuge dieser Weiterverarbeitung wird eine signifikante Verbesserung der Zähigkeitseigenschaften und/oder eine wesentliche Erhöhung von Zugfestigkeit Rₘ, Dehngrenze Rp₀,₂ und Härte erzielt.

Ein weiter Aspekt der Erfindung betrifft ein Verfahren zur Herstellung von Bändern, Platten, Bolzen, Drähten, Stangen, Rohren und Profilen aus der erfindungsgemäßen Kupfer-Zinn-Mehrstoffbronze mit Hilfe des Kokillengussverfahrens bzw. des kontinuierlichen oder halbkontinuierlichen Stranggussverfahrens.

Vorteilhafterweise kann die Weiterverarbeitung des Gusszustandes die Durchführung von zumindest einer Warmumformung von 600 bis 880 °C umfassen. Mit einer Warmumformung können Bänder, Drähte, Stangen, Rohre und Profile hergestellt werden.

Eine Variante der Weiterverarbeitung des Gusszustandes oder nach einer Warmumformung der erfindungsgemäßen Legierung beinhaltet vorteilhafterweise zumindest eine Glühbehandlung in einem Temperaturbereich von 200 bis 880°C. Somit werden die Ausscheidungs-, Entmischungs- und Umwandlungsvorgänge, die teilweise schon während des Gießprozesses stattfinden, weiter intensiviert. Das Ergebnis beinhaltet eine weitere Verbesserung der Zähigkeits- und Festigkeitseigenschaften sowie eine Erhöhung der Härte. Zusätzlich wird das Gefüge infolge der Glühbehandlung homogenisiert. Dies ist bedeutsam für die Einsatzbereiche in der Technik, bei denen es besonders zur dynamischen Wechsel- und Schlagbeanspruchung der Bauteile kommt.

Für die Anwendung der erfindungsgemäßen Kupfer-Zinn-Mehrstoffbronze, beispielsweise als Gleitlagerflächen auf einem Verbundbauteil, kann wahlweise folgende Wärmebehandlung nach dem Aufschmelzen der Mehrstoffbronze auf dem Grundkörper durchgeführt werden:
Lösungsglühen bei einer Temperatur zwischen 700 und 880°C mit nachfolgendem Auslagern bei einer Temperatur zwischen 350 und 650°C.

Auch kann die Legierung zwischen dem Lösungsglühen und dem Auslagern mittels beruhigter oder beschleunigter Luft oder Wasser abgekühlt werden.

Beispielsweise beträgt die Behandlungsdauer beim Lösungsglühen 0,5 bis 12 Stunden. Vorteilhafterweise beträgt die Behandlungsdauer bei der nachfolgenden Auslagerungsglühung 1 bis 12 Stunden.

Durch ein Lösungsglühen mit anschließendem Auslagern bei erhöhter Temperatur können die Zähigkeits- und Festigkeitseigenschaften signifikant verbessert sowie die Härte gesteigert werden. Dies kann besonders in Verbindung mit einem Aufschmelzen der erfindungsgemäßen Kupfer-Zinn-Mehrstoffbronze auf andere Werkstoffe nutzbar gemacht werden. So liegen (DIN EN 10083-1) die Behandlungstemperaturen für Vergütungsstähle (Härten 820 bis 860°C, Anlassen 540 bis 660°C) in dem Wärmebehandlungsbereich der neuen Mehrstoffbronze (Lösungsglühen 700 bis 880°C, Auslagern 350 bis 650°C). Dies bedeutet, dass nach dem Aufschmelzen der Kupferlegierung auf einen Grundkörper aus Vergütungsstahl die mechanischen Eigenschaften beider Verbundpartner in nur einem Behandlungsschritt optimiert werden können. Außer dem Aufschmelzen kommen auch weitere Fügeverfahren in Betracht. Denkbar wären in diesem Zusammenhang auch ein Aufschmieden, Auflöten und das Aufschweißen mit der wahlweisen Durchführung von zumindest einer Glühung im Temperaturbereich von 200 bis 880°C. Ebenso können beispielsweise Lager-Verbundschalen durch Walzplattieren bzw. Laser-Walzplattieren von Stahlbändern und Bändern aus der erfindungsgemäßen Legierung in Betracht kommen.

Eine weitere vorteilhafte Möglichkeit der Weiterverarbeitung des Gusszustandes oder des warmumgeformten Zustandes oder des geglühten Gusszustandes oder des geglühten warmumgeformten Zustandes umfasst die Durchführung von zumindest einer Kaltumformung. Mit diesem Verfahrensschritt werden insbesondere die Werkstoffkennwerte Rₘ, Rp_{0,2} sowie die Härte signifikant erhöht.

Dies ist für die Anwendungsfälle bedeutsam, bei denen es zu einer mechanischen Beanspruchung und/oder zu einer intensiven abrasiven und adhäsiven Verschleißbeanspruchung der Bauelemente kommt.

Zur entsprechenden Rekristallisation nach einem Kaltumformen kann zumindest eine Glühbehandlung in einem Temperaturbereich von 400 bis 850 °C durchgeführt werden. Einerseits werden dadurch die Ausscheidungs-, Entmischungs- und Umwandlungsvorgänge, die teilweise schon während des Gießprozesses stattfinden, weiter intensiviert. Andererseits erfolgt durch diese thermische Behandlung/en eine Rekristallisation des Gefüges der erfindungsgemäßen Legierung. Die somit entstehende sehr feinkörnige Struktur stellt eine wichtige Voraussetzung dar, um die Eigenschaftskombination aus hoher Festigkeit und Härte und aus hinreichender Zähigkeit des Werkstoffes herzustellen.

Für eine Absenkung der Eigenspannungen der Bauteile kann vorteilhafterweise zusätzlich eine Entspannungs-/Auslagerungsglühung in einem Temperaturbereich von 200 bis 650 °C durchgeführt werden.

Für die Einsatzgebiete mit einer besonders starken komplexen Bauteilbeanspruchung kann eine Weiterverarbeitung gewählt werden, welche eine Kombination von wahlweise zumindest einer Warmumformung und zumindest einer Kaltumformung in Verbindung mit zumindest einer Glühung in einem Temperaturbereich von 400 bis 850°C umfassen und zu einer Rekristallisation des Gefüges der erfindungsgemäßen Legierung führen. Die auf diese Weise eingestellte feinkörnige Struktur der Legierung gewährleistet eine Kombination aus hoher Festigkeit, hoher Härte und guten Zähigkeitseigenschaften. Zusätzlich kann zur Absenkung der Eigenspannungen der Bauteile eine Entspannungsglühbehandlung im Temperaturbereich von 200 bis 650°C erfolgen.

Folge der Bandfertigung beim Leg.-Typ 1, 2 und 3:
- Kombination von Kaltumformungen/Glühungen bei den Temperaturen
   - Leg.-Typ 1: 700°C/4 h
   - Leg.-Typ 2: 700°C/3 h bis 730°C/5 h
   - Leg.-Typ 3: 700°C/5 h bis 750°C/5 h
   mit den abschließenden Entspannungsglühungen bei den Temperaturen
   - Leg.-Typ 1: 350°C/3 h
   - Leg.-Typ 2 und 3: 350°C/4 h

Nach durchlaufener Fertigung befinden sich die mechanischen Eigenschaften der Bänder auf dem Niveau, das in Zahlenwerten in Tab. 3 dargestellt ist. Die Unterscheidung bei den Leg.-Typen 2 und 3 in jeweils A und B resultiert aus unterschiedlichen Umformgraden der einzelnen Kaltwalzschritte. Die Umformgrade können bei der Weiterverarbeitung der Legierung in einem weiten Umfang variiert werden. Damit ist es möglich, die mechanischen Eigenschaften so einzustellen, wie es für den jeweiligen Einsatzfall von Vorteil ist.

**Tabelle 3: Mechanische Eigenschaften der Bänder (Leg.-Typen 1, 2 und 3)**

| **Nr.** | **Korngröße [µm]** | **Rₘ [MPa]** | **Rp_{0,2} [MPa]** | **A5 [%]** | **E [GPa]** | **HB 1/10** | **HBW 1/30** |
|---|---|---|---|---|---|---|---|
| **Leg.-Typ 1** | 5-10 | 651 | 551 | 25,0 | 127 | 200 | 208 |
| **Leg.-Typ 2 A** | 5-10 | 658 | 563 | 21,0 | 117 | 195 | 212 |
| **Leg.-Typ 2 B** | 5-10 | 600 | 483 | 32,3 | 119 | 181 | 185 |
| **Leg.-Typ 3 A** | 5-10 | 660 | 568 | 19,6 | 116 | 200 | 214 |
| **Leg.-Typ 3 B** | 5-10 | 591 | 472 | 33,5 | 121 | 184 | 190 |

Folge der Bandfertigung beim Leg.-Typ 2 und 3:
- Kombination von Warmumformungen in einem Temperaturbereich von 770 bis 800°C/Kaltumformungen/Glühungen bei den Temperaturen
   - Leg.-Typ 2: 700°C/3 h bis 750°C/4 h
   - Leg.-Typ 3: 720°C/3 h bis 760°C/5 h
   mit den abschließenden Entspannungsglühungen bei den Temperaturen
   - Leg.-Typ 2 und 3: 350°C/4 h

Nach durchlaufener Fertigung befinden sich die mechanischen Eigenschaften der Bänder auf dem Niveau, das in Zahlenwerten in Tab. 4 dargestellt ist. Die Unterscheidung bei den Leg.-Typen 2 und 3 in jeweils A und B resultiert aus unterschiedlichen Umformgraden der einzelnen Kaltwalzschritte. Die Umformgrade können bei der Weiterverarbeitung der erfindungsgemäßen Legierung in einem weiten Umfang variiert werden. Damit ist es möglich, die mechanischen Eigenschaften so einzustellen, wie es für den jeweiligen Einsatzfall von Vorteil ist.

**Tabelle 4: Mechanische Eigenschaften der Bänder (Leg.-Typen 2 und 3)**

| **Nr.** | **Korngröße [µm]** | **Rₘ [MPa]** | **Rp_{0,2} [MPa]** | **A5 [%]** | **E [GPa]** | **HB 1/10** | **HBW 1/30** |
|---|---|---|---|---|---|---|---|
| **Leg.-Typ 2 A** | 5-15 | 634 | 531 | 27,9 | 131 | 197 | 204 |
| **Leg.-Typ 2 B** | 5-15 | 559 | 440 | 30,5 | 123 | 175 | 182 |
| **Leg.-Typ 3 A** | 5-15 | 651 | 554 | 21,6 | 118 | 202 | 211 |
| **Leg.-Typ 3 B** | 5-15 | 570 | 450 | 28,9 | 124 | 175 | 183 |

Die erfindungsgemäße Kupfer-Zinn-Mehrstoffbronze besitzt bereits im Gusszustand sowie auch im warmumgeformten und im geglühten Zustand eine hervorragende Kaltumformbarkeit. Dadurch ist es möglich, mittels Veränderung des Umformgrades der zumindest einen Kaltumformung jeweils die Festigkeits- und Härtewerte sowie die Zähigkeitseigenschaften der Legierung je nach Anforderungsprofil in einem sehr großen Bereich zu variieren. So kann beispielsweise mit der Wahl eines größeren Kaltumformgrades die Härte des Werkstoffes auf > 250 HBW1/30 eingestellt werden. Zugunsten besserer Zähigkeitseigenschaften führen kleinere Kaltumformgrade zu entsprechend niedrigeren Härtewerten.

Das Legierungssystem der erfindungsgemäßen Kupfer-Zinn-Mehrstoffbronze bietet die Möglichkeit, mittels einer thermischen Behandlung Einfluss auf Phasenzusammensetzung und Korngröße der Matrix bzw. auf den Gehalt, die Dichte und die Größe der Hartphasen und Silizide zu nehmen. Dadurch ist es zusätzlich möglich, mittels Veränderung von Temperaturhöhe und Dauer der zumindest einen Glühung die Festigkeits- und Härtewerte sowie die Zähigkeitseigenschaften der Legierung je nach Anforderung in einem sehr großen Bereich zu variieren. So kann beispielsweise mit der Wahl einer höheren Glühtemperatur und/oder Glühdauer (= Weichglühen) die Härte des Werkstoffes auf < 100 HB1,0/10 eingestellt werden. Demgegenüber ist es möglich, mit einer niedrigeren Glühtemperatur und /oder Glühdauer (= Entspannungsglühen) den Gefügezustand der Legierung, beispielsweise den Grad der Kaltverfestigung, weitgehend beizubehalten. Auf diese Weise kann der Kennwert der Härte auf einem Niveau > 200 HBW1/30 eingestellt werden.

Die erfindungsgemäße Kupfer-Zinn-Mehrstoffbronze kann insbesondere für Gleitlagerflächen in Verbundkomponenten, für Gleitelemente in Verbrennungsmotoren, Getrieben, Abgasnachbehandlungsanlagen, Hebel- und Gelenksystemen, hydraulischen Aggregaten oder in Maschinen und Anlagen des allgemeinen Maschinenbaus verwendet werden.

Eine weitere Verwendung kann auch im Bereich der verschleißbeanspruchten Bauelemente in der Elektronik/Elektrotechnik, z.B. Steckverbinder liegen.

Des Weiteren kann die erfindungsgemäße Kupfer-Zinn-Mehrstoffbronze für metallene Gegenstände in der Aufzucht von im Meerwasser lebenden Organismen verwendet werden. Insbesondere kann die Legierung für verschleißbeanspruchte Bauelemente von Käfigsystemen für die maritime Fischzucht, auch unter dem Begriff "Aquaculture" bekannt, bevorzugt eingesetzt werden. Die Gegenstände betreffen Netze, Gewebe, Geflechte und Gitter, die aus Drähten oder aus Metallbändern hergestellt werden. Auch Stangen, Profile oder Profilrohre zur Befestigung oder Stabilisierung kommen in Betracht. Ebenso können Rohre oder Hohlprofile aus der erfindungsgemäßen Legierung Verwendung finden, die als Befestigungselemente, Schwimmkörper oder Versorgungs- und Entsorgungsleitungen eingesetzt werden.

## Patentansprüche

1. Kupfer-Zinn-Mehrstoffbronze, bestehend aus (in Gew.-%):
0,5 bis 14,0 % Sn,
0,01 bis 7,0 % Zn,
0,05 bis 2,0 % Al,
0,01 bis 2,0 % Si,
0,1 bis 2,0 % Fe,
wahlweise noch 0,2 bis 4,0 % Mn,
wahlweise noch bis maximal 0,08 % P und
wahlweise noch bis maximal 0,08 % S,
Rest Kupfer und unvermeidbaren Verunreinigungen, wobei in der Legierung der Gehalt von Zinn größer ist als der von Zink.

2. Kupfer-Zinn-Mehrstoffbronze nach Anspruch 1, **gekennzeichnet durch**:
3,0 bis 8,0 % Sn,
1,5 bis 5,5 % Zn,
0,05 bis 1,2 % Al,
0,01 bis 1,2 % Si,
0,1 bis 2,0 % Fe,
wahlweise noch 0,2 bis 3,0 % Mn,
wahlweise noch bis maximal 0,08 % P und
wahlweise noch bis maximal 0,08 % S,
Rest Kupfer und unvermeidbaren Verunreinigungen.

3. Kupfer-Zinn-Mehrstoffbronze nach Anspruch 1, **gekennzeichnet durch**:
0,5 bis 14,0 % Sn,
0,01 bis 7,0 % Zn,
0,2 bis 4,0 % Mn,
0,1 bis 2,0 % Fe,
0,05 bis 2,0 % Al,
0,01 bis 2,0 % Si
wahlweise noch bis maximal 0,08 % P und
wahlweise noch bis maximal 0,08 % S,
Rest Kupfer und unvermeidbaren Verunreinigungen.

4. Kupfer-Zinn-Mehrstoffbronze nach Anspruch 3, **gekennzeichnet durch**:
4,0 bis 5,0 % Sn,
2,0 bis 3,0 % Zn,
1,0 bis 2,5 % Mn,
0,3 bis 1,5 % Fe,
0,3 bis 1,2 % Al,
0,3 bis 1,0 % Si
wahlweise noch bis maximal 0,08 % P und
wahlweise noch bis maximal 0,08 % S,
Rest Kupfer und unvermeidbaren Verunreinigungen.

5. Kupfer-Zinn-Mehrstoffbronze nach einem der Ansprüche 1 bis 4, **dadurch gekennzeichnet, dass** die Legierung bis auf etwaige unvermeidbare Verunreinigungen frei von Nickel und Blei ist.

6. Kupfer-Zinn-Mehrstoffbronze nach einem der Ansprüche 1 bis 5, **dadurch gekennzeichnet, dass** in der Kupfer-Zinn-Mischkristall-Matrix Fe-Silizide, Al-haltige Fe-Silizide, intermetallische Phasen des Systems Fe-Al, Fe-Partikel sowie gegebenenfalls Mn-haltige Fe-Mischsilizide und Mn-Al-haltige Fe-Mischsilizide eingelagert sind.

7. Kupfer-Zinn-Mehrstoffbronze nach einem der Ansprüche 1 bis 6, **dadurch gekennzeichnet, dass** die Matrix des Gefüges im Gusszustand mit steigendem Sn-Gehalt der Legierung, abhängig vom Gieß-/Abkühlungsprozess, aus zunehmenden Anteilen an δ-Phase (Sn-reich) in sonst α-Phase (Sn-arm) der zinkhaltigen Cu-Sn-Mischkristallarten besteht.

8. Kupfer-Zinn-Mehrstoffbronze nach einem der Ansprüche 1 bis 7, **dadurch gekennzeichnet, dass** nach einer Weiterverarbeitung, die zumindest eine Warmumformung oder zumindest eine Kaltumformung oder zumindest eine Warmumformung und eine Kaltumformung sowie wahlweise weitere Glühschritte beinhaltet, das Gefüge mit einem Gehalt der δ-Phase bis zu 60 Vol.-%, der Silizide, Fe-Al-Phasen und der Fe-Partikel bis zu 20 Vol.-% sowie ein Rest α-Phase vorliegt.

9. Verfahren zur Herstellung von Bändern, Platten, Bolzen, Drähten, Stangen, Rohren und Profilen aus einer Kupfer-Zinn-Mehrstoffbronze nach einem der Ansprüche 1 bis 8 mit Hilfe des Kokillengussverfahrens bzw. des kontinuierlichen oder halbkontinuierlichen Stranggussverfahrens.

10. Verfahren nach Anspruch 9, **dadurch gekennzeichnet, dass** die Weiterverarbeitung des Gusszustandes die Durchführung von zumindest einer Warmumformung im Temperaturbereicht von 600 bis 880 °C umfasst.

11. Verfahren nach Anspruch 9 oder 10, **dadurch gekennzeichnet, dass** zumindest eine Glühbehandlung in einem Temperaturbereich von 200 bis 880°C durchgeführt wird.

12. Verfahren nach einem der Ansprüche 9 bis 11, **dadurch gekennzeichnet, dass** die Weiterverarbeitung des Gusszustandes oder des warmumgeformten Zustandes oder des geglühten Gusszustandes oder des geglühten warmumgeformten Zustandes die Durchführung von zumindest einer Kaltumformung umfasst.

13. Verfahren nach Anspruch 12, **dadurch gekennzeichnet, dass** zumindest eine Glühbehandlung in einem Temperaturbereich von 400 bis 850 °C durchgeführt wird.

14. Verfahren nach einem der Ansprüche 11 bis 13, **dadurch gekennzeichnet, dass** eine Entspannungs-/Auslagerungsglühung in einem Temperaturbereich von 200 bis 650 °C durchgeführt wird.

15. Verwendung der Kupfer-Zinn-Mehrstoffbronze nach einem der Ansprüche 1 bis 8 für Gleitlagerflächen in Verbundkomponenten, für Gleitelemente in Verbrennungsmotoren, Getrieben, Abgasnachbehandlungsanlagen, Hebel - und Gelenksystemen, hydraulischen Aggregaten oder in Maschinen und Anlagen des allgemeinen Maschinenbaus.

16. Verwendung der Kupfer-Zinn-Mehrstoffbronze nach einem der Ansprüche 1 bis 8 für Bauelemente in der Elektronik/Elektrotechnik.

17. Verwendung der Kupfer-Zinn-Mehrstoffbronze nach einem der Ansprüche 1 bis 8 für metallene Gegenstände in der Aufzucht von im Meerwasser lebenden Organismen.

## Claims

1. Copper/tin multi-alloy bronze, comprising (in % by weight) :
from 0.50 to 14.0% Sn,
from 0.01 to 7.0% Zn,
from 0.05 to 2.0% Al,
from 0.01 to 2.0% Si,
from 0.1 to 2.0% Fe,
optionally also from 0.2 to 4.0% Mn,
optionally also up to a maximum of 0.08% P and
optionally also up to a maximum of 0.08% S,
the balance copper and inevitable impurities, the content of tin in the alloy being greater than that of zinc.

2. Copper/tin multi-alloy bronze according to claim 1, **characterised by**:
from 3.0 to 8.0% Sn,
from 1.5 to 5.5% Zn,
from 0.05 to 1.2% Al,
from 0.01 to 1.2% Si,
from 0.1 to 2.0% Fe,
optionally also from 0.2 to 3.0% Mn,
optionally also up to a maximum of 0.08% P and
optionally also up to a maximum of 0.08% S,
the balance copper and inevitable impurities.

3. Copper/tin multi-alloy bronze according to claim 1, **characterised by**:
from 0.5 to 14.0% Sn,
from 0.01 to 7.0% Zn,
from 0.2 to 4.0% Mn,
from 0.1 to 2.0% Fe,
from 0.05 to 2.0% Al,
from 0.01 to 2.0% Si
optionally also up to a maximum of 0.08% P and
optionally also up to a maximum of 0.08% S,
the balance copper and inevitable impurities.

4. Copper/tin multi-alloy bronze according to claim 3, **characterised by**:
from 4.0 to 5.0% Sn,
from 2.0 to 3.0% Zn,
from 1.0 to 2.5% Mn,
from 0.3 to 1.5% Fe,
from 0.3 to 1.2% Al,
from 0.3 to 1.0% Si
optionally also up to a maximum of 0.08% P and
optionally also up to a maximum of 0.08% S,
the balance copper and inevitable impurities.

5. Copper/tin multi-alloy bronze according to any one of claims 1 to 4, **characterised in that** the alloy is free from nickel and lead with the exception of any inevitable impurities.

6. Copper/tin multi-alloy bronze according to any one of claims 1 to 5, **characterised in that** Fe silicides, Al-containing Fe silicides, intermetallic phases of the Fe/Al system, Fe particles and optionally Mn-containing Fe mixed silicides and Mn/Al-containing Fe mixed silicides are incorporated in the copper/tin mixed crystal matrix.

7. Copper/tin multi-alloy bronze according to any one of claims 1 to 6, **characterised in that** the matrix of the structure in the cast state, as the Sn content of the alloy increases, dependent on the casting/cooling process, comprises increasing proportions of δ-phase (Sn rich) in otherwise α-phase (Sn poor) of the zinc-containing Cu/Sn mixed crystal types.

8. Copper/tin multi-alloy bronze according to any one of claims 1 to 7, **characterised in that**, after further processing which comprises at least one hot forming operation or at least one cold forming operation or at least one hot forming operation and one cold forming operation and optionally other annealing steps, the structure is present with a content of the δ-phase of up to 60% by volume, of the silicides, Fe/Al phases and the Fe particles of up to 20% by volume and a balance of α-phase.

9. Method for producing strips, plates, pins, wires, rods, pipes and profile-members from a copper/tin multi-alloy bronze according to any one of claims 1 to 8, using the chilled casting method or the continuous or semi-continuous billet casting method.

10. Method according to claim 9, **characterised in that** the further processing of the cast state involves carrying out at least one hot forming operation in the temperature range from 600 to 880°C.

11. Method according to claim 9 or claim 10, **characterised in that** at least one annealing processing operation is carried out in a temperature range from 200 to 880°C.

12. Method according to any one of claims 9 to 11, **characterised in that** the further processing of the cast state or the hot formed state or the annealed cast state or the annealed hot formed state involves carrying out at least one cold forming operation.

13. Method according to claim 12, **characterised in that** at least one annealing processing operation is carried out in a temperature range from 400 to 850°C.

14. Method according to any one of claims 11 to 13, **characterised in that** a relaxation/precipitation annealing operation is carried out in a temperature range from 200 to 650°C.

15. Use of the copper/tin multi-alloy bronze according to any one of claims 1 to 8 for plain bearing surfaces in composite components, for sliding elements in internal-combustion engines, gears, exhaust gas reprocessing systems, lever and articulation systems, hydraulic units or in machines and installations of general mechanical engineering.

16. Use of the copper/tin multi-alloy bronze according to any one of claims 1 to 8 for structural elements in electronics/electrical engineering.

17. Use of the copper/tin multi-alloy bronze according to any one of claims 1 to 8 for metal objects in the rearing of organisms which live in seawater.

## Revendications

1. Bronze multi-matériaux cuivre - zinc, contenant (en % en poids) :
0,5 à 14,0 % de Sn,
0,01 à 7,0 % de Zn,
0,05 à 2,0 % de Al,
0,01 à 2,0 % de Si,
0,1 à 2,0 % de Fe,
au choix encore 0,2 à 4,0 % de Mn,
au choix encore jusqu'à au maximum 0,08 % de P et
au choix encore jusqu'à au maximum 0,08 % de S,
le reste de cuivre et d'impuretés inévitables, la teneur en étain dans l'alliage étant supérieure à celle du zinc.

2. Bronze multi-matériaux cuivre - zinc selon la revendication 1, **caractérisé par** :
3,0 à 8,0 % de Sn,
1,5 à 5,5 % de Zn,
0,05 à 1,2 % de Al,
0,01 à 1,2 % de Si,
0,1 à 2,0 % de Fe,
au choix encore 0,2 à 3,0 % de Mn,
au choix encore jusqu'à au maximum 0,08 % de P et
au choix encore jusqu'à au maximum 0,08 % de S,
le reste de cuivre et d'impuretés inévitables.

3. Bronze multi-matériaux cuivre - zinc selon la revendication 1, **caractérisé par** :
0,5 à 14,0 % de Sn,
0,01 à 7,0 % de Zn,
0,2 à 4,0 % de Mn,
0,1 à 2,0 % de Fe,
0,05 à 2,0 % de Al,
0,01 à 2,0 % de Si,
au choix encore jusqu'à au maximum 0,08 % de P et
au choix encore jusqu'à au maximum 0,08 % de S,
le reste de cuivre et d'impuretés inévitables.

4. Bronze multi-matériaux cuivre - zinc selon la revendication 3, **caractérisé par** :
4,0 à 5,0 % de Sn,
2,0 à 3,0 % de Zn,
1,0 à 2,5 % de Mn,
0,3 à 1,5 % de Fe,
0,3 à 1,2 % de Al,
0,3 à 1,0 % de Si,
au choix encore jusqu'à au maximum 0,08 % de P et
au choix encore jusqu'à au maximum 0,08 % de S,
le reste de cuivre et d'impuretés inévitables.

5. Bronze multi-matériaux cuivre - zinc selon l'une des revendications 1 à 4, **caractérisé en ce que** l'alliage est exempt de nickel et de plomb à l'exception des éventuelles impuretés inévitables.

6. Bronze multi-matériaux cuivre - zinc selon l'une des revendications 1 à 5, **caractérisé en ce que** des siliciures de Fe, des siliciures de Fe contenant du Al, des phases intermétalliques du système Fe-Al, des particules de Fe et le cas échéant des siliciures mixtes de Fe contenant du Mn et des siliciures mixtes de Fe contenant du Mn - Al sont incrustées dans la matrice de cristaux mixtes cuivre - étain.

7. Bronze multi-matériaux cuivre - zinc selon l'une des revendications 1 à 6, **caractérisé en ce que** la matrice du squelette à l'état de fonte ayant une teneur croissante en Sn de l'alliage, indépendamment du procédé de coulée/refroidissement, se compose de proportions croissantes de phase δ (riche en Sn) dans la phase α restante (pauvre en Sn) des types de cristaux mixtes Cu - Sn contenant du zinc.

8. Bronze multi-matériaux cuivre - zinc selon l'une des revendications 1 à 7, **caractérisé en ce que**, après une retransformation, qui implique au moins un formage à chaud ou au moins un formage à froid ou au moins un formage à chaud et un formage à froid et au choix d'autres étapes de recuit, le squelette a une teneur en phase δ allant jusqu'à 60 % en volume, en siliciures, phases Fe-Al et particules de Fe allant jusqu'à 20 % en volume, ainsi que le reste en phase α.

9. Procédé de fabrication de bandes, de plaques, de boulons, de fils, de tiges, de tubes et de profilés constitués d'un bronze multi-matériaux cuivre - zinc selon l'une des revendications 1 à 8 à l'aide du procédé de coulée en coques ou du procédé de coulée continue ou semi-continue.

10. Procédé selon la revendication 9, **caractérisé en ce que** la retransformation de l'état de fonte comprend la réalisation d'au moins un formage à chaud dans la plage de températures de 600 à 880 °C.

11. Procédé selon la revendication 9 ou 10, **caractérisé en ce qu'**au moins un traitement de recuit dans une plage de température de 200 à 880 °C est réalisé.

12. Procédé selon l'une des revendications 9 à 11, **caractérisé en ce que** la retransformation de l'état de fonte ou de l'état formé à chaud ou de l'état de fonte recuit ou de l'état recuit formé à chaud comprend la réalisation d'au moins un formage à froid.

13. Procédé selon la revendication 12, **caractérisé en ce qu'**au moins un traitement de recuit dans une plage de température de 400 à 850 °C est réalisé.

14. Procédé selon l'une des revendications 11 à 13, **caractérisé en ce qu'**un recuit de détente/de précipitation dans une plage de températures de 200 à 650 °C est réalisé.

15. Utilisation du bronze multi-matériaux cuivre - étain selon l'une des revendications 1 à 8 pour des surfaces de paliers lisses dans des composants composites, pour les éléments coulissants dans des moteurs à combustion, des engrenages, des dispositifs de retraitement des gaz d'échappement, des systèmes de levage et de direction, des groupes hydrauliques ou dans des machines et systèmes de construction de machines outils générale.

16. Utilisation du bronze multi-matériaux cuivre - étain selon l'une des revendications 1 à 8 pour les éléments de construction dans l'électronique/l'électrotechnique.

17. Utilisation du bronze multi-matériaux cuivre - étain selon l'une des revendications 1 à 8 pour des objets métallisés dans l'élevage d'organismes vivants dans l'eau de mer.
